# EUROPÄISCHE PATENTSCHRIFT

(11) **EP 0 342 554 B1**
(45) Veröffentlichungstag und Bekanntmachung des Hinweises auf die Patenterteilung: **15.01.1997**
(21) Anmeldenummer: 89108623.3
(22) Anmeldetag: 12.05.1989
(51) Int. Cl.: H02K 9/19, H02K 3/24

(54) **Elektrische Maschine mit Flüssigkeitskühlung**
Liquid-cooled electric machine
Machine électrique avec refroidissement à liquide

(30) Priorität: 16.05.1988 DE 3816652
(43) Veröffentlichungstag der Anmeldung: 23.11.1989
(73) Patentinhaber: Magnet-Motor Gesellschaft für magnetmotorische Technik mbH, D-82319 Starnberg (DE)
(72) Erfinder: Heidelberg, Götz, Dipl.Phys., 8136 Starnberg-Percha (DE); Gründl, Andreas, Dr., 8000 München 70 (DE); Ehrhart, Peter, Dr., 8000 München 70 (DE); Krömer, Joachim, Dr., D-8190 Wolfratshausen (DE)
(74) Vertreter: Klunker . Schmitt-Nilson . Hirsch

(56) Entgegenhaltungen:
- CH-A- 394 369
- DE-A- 2 016 493
- DE-A- 2 111 881
- DE-C- 331 707
- DE-C- 964 161
- DE-C- 3 635 297
- GB-A- 974 730
- US-A- 4 032 807

## Beschreibung

Die Erfindung bezieht sich auf eine elektrische Maschine gemäß Oberbegriff des Anspruchs 1.

Die elektrische Maschine kann insbesondere ein Elektromotor oder ein Stromgenerator sein.

Eine elektrische Maschine der genannten Art ist aus der US-A-4 032 807 bekannt. Dort ist am Außenumfang des Statorfußes eine schraubenlinienförmig verlaufende Nut herausgearbeitet. Durch diese Nut und eine umschließende Hülse ist ein schraubenlinienförmig verlaufender Kühlmittelkanal gebildet. Vom Austrittsende des Kühlmittelkanals strömt die Kühlflüssigkeit zentral durch den hohlen Statorfuß zurück zu derjenigen Axialseite der Maschine, wo auch der Eintritt in den Kühlmittelkanal ist.

Der Erfindung liegt die Aufgabe zugrunde, eine elektrische Maschine mit besonders effektiver, aber konstruktiv unaufwendiger Kühlung verfügbar zu machen.

Zur Lösung dieser Aufgabe ist die Maschine erfindungsgemäß so ausgebildet, wie im kennzeichnenden Teil des Anspruchs 1 angegeben.

U-förmig verlaufende Kühlmittelrohre innerhalb der Rotorwicklung einer elektrischen Maschine vorzusehen, ist aus der CH-A-394 369 für sich bekannt. Bei Undichtigkeit der Kühlrohre kann die Wicklung beschädigt werden.

Aus der DE-A-2 111 881 ist es für sich bekannt, bei einer elektrischen Maschine Kühlmittelrohre in einen Bettungskörper einzubetten, der einen ringartigen Einsenkern mit Statorwicklung umgibt. Der Bettungskörper ist mit einem Statorhalter verschraubt. Auf dem Bettungskörper ist ein Scheibenförmig ausgebildeter Rotor gelagert.

Die bei elektrischen Maschinen abzuführende Wärme ist in erster Linie Eisenverlustwärme durch Ummagnetisierungsverluste und Kupferverlustwärme durch Leitungsverluste.

Die bei der erfindungsgemäßen Maschine vorgesehenen, U-förmig verlaufenden Kühlmittelrohre lassen sich besonders einfach an einen Kühlmittelkreislauf anschließen.

Die erfindungsgemäße Kühlung eignet sich auch für elektrische Maschinen größerer Leistung, wo die Wärmeabfuhr wegen der höheren Wärmedichte der entstehenden Wärme prinzipiell schwieriger ist.

Bevorzugte Ausgestaltungen der Erfindung sind in den Unteransprüchen angegeben.

Nach einer bevorzugten Weiterbildung der Erfindung sind einzelne oder alle Eisenkerne von Wicklungen des Stators mit Kühlkanälen versehen. Diese Kühlkanäle können zusätzlich zu Kühlkanälen der vorstehend beschriebenen Art vorgesehen und gewünschtenfalls mit diesen kommunizierend ausgebildet sein.

Die Erfindung und Weiterbildungen der Erfindung werden im folgenden anhand eines zeichnerisch dargestellten, bevorzugten Ausführungsbeispiels noch näher erläutert, wobei die gemäß Patentanspruch 1 vorgesehenen Kühlsmittelrohre nicht gezeichnet sind, aber textlich erlaütert werden. Es zeigt:
- Fig. 1: einen fragmentarischen Längsschnitt eines Elektromotors;
- Fig. 2: einen fragmentarischen Querschnitt des Stators eines anderen Elektromotors.

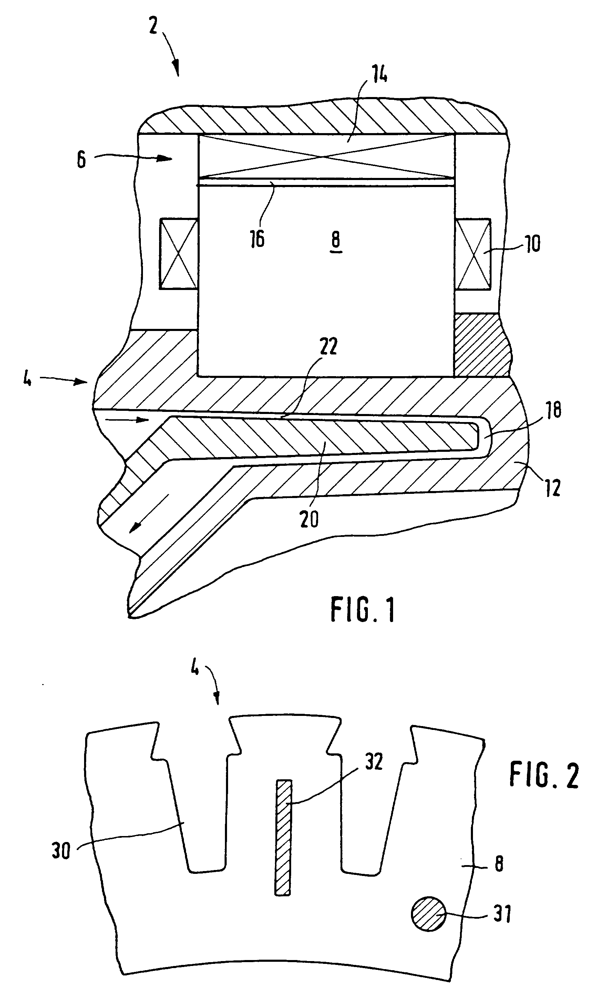

Der in Fig. 1 mit einem Teilbereich gezeichnete Elektromotor 2 weist einen Stator 4 und einen insgesamt im wesentlichen hohlzylindrischen Rotor 6 auf, der konzentrisch um den Stator 4 herum als Außenrotor angeordnet ist. Die Rotationsachse des Motors 2 liegt waagerecht unterhalb des unteren Zeichnungsrands.

Der Stator 4 des Motors 2 ist umfangsmäßig verteilt mit geblechten Polzähnen 8 versehen, die jeweils eine Wicklung 10 bzw. Spule aufweisen. Bei dem gezeichneten Ausführungsbeispiel sind die Polzähne axial auf einen massiven, ungeblechten Zentralbereich 12 des Stators 4 aufgeschoben und dort befestigt. Jeder Polzahn 8 bildet einen der entsprechenden Wicklung 10 zugeordneten Eisenkern. Die Polzähne 8 können radial innere Bereiche aufweisen, die in Umfangsrichtung aneinanderstoßen.

Der Rotor 6 ist an seinem Innenumfang mit umfangsmäßig verteilten Dauermagneten 14 wechselnder Polung versehen. Zwischen den radial inneren Oberflächen der Dauermagnete 14 und den radial äußeren Flächen der Polzähne 8 befindet sich ein Luftspalt 16.

Es handelt sich um einen elektronisch kommutierten Motor 2. Da derartige Motoren an sich bekannt sind, müssen hier weitere Einzelheiten der elektronischen Kommutierung nicht beschrieben werden. Der Zentralbereich 12 des Stators 4 stellt einen für die Polzähne 8 gemeinsamen, inneren Statorfuß dar. Gemäß einer nicht beanspruchten Ausführung weist der Statorfuß 12 eine tiefe Ausnehmung 18 auf, die zu einem Axialende des Stators 4 hin offen ist, sich axial über eine etwas größere Länge als der Axiallänge der Statorzähne 8 entsprechend erstreckt, und sich - im nicht gezeichneten Querschnitt betrachtet - über den gesamten Umfang des Statorfusses 12 erstreckt. In diese tiefe Ausnehmung 18 ist von einer Axialseite her ein Einschubteil 20 derart eingebaut, daß radial außerhalb und radial innerhalb sowie stirnseitig ein Spalt zum Statorfuß 12 freibleibt. Auf diese Art ist ein im Längsschnitt U-förmiger Kühlmittelkanal 22 gebildet, in dem im radial äußeren Ast ein Kühlmittel, beispielsweise Wasser, in einer ersten Axialrichtung strömt, um in radial inneren Ast zur gleichen Axialseite der Maschine zurückzuströmen. Im nicht gezeichneten Querschnitt betrachtet haben beide Äste eine ringspaltförmige Konfiguration.

Alternativ kann der Motor 2 mehrere, umfangsmäßig verteilte Ausnehmungen 18 und pro Ausnehmung 18 ein Einschubteil 20 aufweisen. Auf diese Weise entstehen umfangsmäßig verteilt mehrere U-förmige Kühlmittelkanäle 22.

Beim Schutzgegenstand des Patents sind keine Ausnehmung 18 und kein Einschubteil 20 vorgesehen, sondern statt dessen U-förmig gebogene Rohre in das Material des Statorfusses 12 eingegossen. Diese Rohre können so verlaufen, wie für die Kühlmittelkanäle 22 in Fig. 1 gezeichnet. Die beiden Äste der Kühlmittelrohre können aber auch in einer gemeinsamen Umfangsebene liegen, so daß sich eine gegenüber der Fig. 1 um 90° gedrehte Konfiguration ergibt.

Man erkennt, daß die Kühlmittelkanäle 22 radial relativ dicht am inneren Fuß der Statorzähne liegen und daher an einer für die Wärmeabfuhr günstigen Stelle nicht weit entfernt von den Wärmeentstehungsorten.

Die erfindungsgemäße Kühlung eignet sich ganz besonders für Maschinen einer Bauart, bei der nur auf jeden zweiten Statorzahn 8 eine Wicklung 10 aufgeschoben ist.

Das gezeichnete Ausführungsbeispiel war ein Motor mit zentralem Stator und hohlzylindrischem Außenläufer. Es versteht sich, daß analog auch Motoren oder Generatoren mit hohlzylindrischem, äußerem Stator und zentralem Rotor gebaut werden können, wobei der luftspaltentfernte Statorfuß radial außen liegt.

Bei der Ausführungsform gemäß Fig. 2 sind Kühlkanäle im Material des Stators in enger räumlicher Nachbarschaft zu den mit Wicklungen versehenen Statorzähnen 8 vorgesehen. Als eine erste Möglichkeit ist ein in Axialrichtung verlaufender Kühlkanal 31 radial knapp innerhalb desjenigen Durchmessers, bis zu dem der Grund der Statornuten 30 reicht, dargestellt. Als zweite Möglichkeit ist ein Kühlmittelkanal im Inneren eines Statorzahns 8 dargestellt, also in einem Bereich, wo der betreffende Statorzahn 8 von einer nicht dargestellten Wicklung umschlossen ist. Die Kühlmittelkanäle 31, 32 können rohrförmig oder schlitzförmig sein. Sie können radial innen oder an einer axialen Stirnseite des Stators 4 an einen Kühlmittelkreislauf angeschlossen sein. Sie können ferner, insoweit kombiniert mit der Ausführungsform gemäß Fig. 1, mit Kühlmittelkanälen 22 der weiter vorn beschriebenen Art kommunizieren.

Abschließend wird darauf hingewiesen, daß eine Kühlung der im Zusammenhang mit Fig. 1 geschilderten Art ganz besonders für schlagwettergeschütze Maschinen geeignet ist, weil die Kühlkanäle in einem Bereich der Maschine liegen, der von dem elektrischen bzw. magnetischen Kernbereich der Maschine (Statorzähne 8, Wicklungen 10, Dauermagnete 14, Luftspalt 16, Kommutierungseinrichtung) durch eine durchgehende, metallische Trennwand getrennt ist.

## Patentansprüche

1. Elektrische Maschine, aufweisend folgende Merkmale:
(a) einen mit Wicklungen(10) versehenen Stator(4), einen Rotor (6) und einen Luftspalt (16) zwischen dem Stator(4) und dem Rotor(6);
(b) der Stator ist mit einem Statorfuß(12) aus Metall und Statorzähnen(8) aufgebaut, die von dem Statorfuß (12) in Richtung zu dem Luftspalt(16) ragen und die alle oder zum Teil mit einer Wicklung(10) versehen sind;
(c) im Statorfuß (12) ist über dessen Umfang eine Kühlmittelführung (22) für flüssiges Kühlmittel in Wärmeübertragungsverbindung mit den Orten der Wärmeentstehung Vorgesehen, wobei das Kühlmittel auf der gleichen Axialseite der Maschine (2) der Kühlmittelführung (22) zuführbar und von dem Statorfuß (12) abführbar ist,
dadurch gekennzeichnet,
(d) daß die Kühlmittelführung mehrere, über den Statorfußumfang verteilte, U-förmig verlaufende Kühlmittelkanäle (22) aufweist, deren beide Schenkel jeweils radial gegenüber der Statorfußachse beabstandet in Wärmeübertragungsverbindung mit den Orten der Wärmeentstehung angeordnet sind, so daß Kühlmitteleintritt und Kühlmittelaustritt auf der gleichen Axialseite der Maschine(2) liegen;
(e) und daß die U-förmig verlaufenden Kühlmittelkanäle (22) durch in das Metall des Statorfußes (12) eingegossene Kühlmittelrohre gebildet sind.

2. Maschine nach Anspruch 1,
dadurch gekennzeichnet,
daß die Statorzähne (8) axial auf den Statorfuß (12) aufgeschoben und befestigt sind.

3. Maschine nach Anspruch 1 oder 2,
dadurch gekennzeichnet,
daß der Statorfuß (12) eine durchgehende Trennwand bildet.

4. Maschine nach einem der Ansprüche 1 bis 3,
dadurch gekennzeichnet, daß zusätzliche Kühlkanäle (32) in einzelnen oder allen, mit Wicklungen (10) versehenen Statorzähnen (8) aus Eisen vorgesehen sind.

5. Maschine nach Anspruch 4,
**dadurch gekennzeichnet**
daß die Kühlkanäle (32) mit den Kühlmittelrohren kommunizieren.

6. Maschine nach einem der Ansprüche 1 bis 5,
**dadurch gekennzeichnet**
daß die Wicklungen (10) mit wärmeleitender Vergußmasse vergossen sind.

7. Maschine nach einem der Ansprüche 1 bis 6,
**gekennzeichnet durch** dauermagnetische Erregung für den Rotor (6).

8. Maschine nach einem der Ansprüche 1 bis 7,
**gekennzeichnet durch** elektronische Kommutierung.

9. Maschine nach einem der Ansprüche 1 bis 8,
**dadurch gekennzeichnet**
daß der Rotor (6) als hohlzylindrischer Außenrotor ausgebildet ist.

## Claims

1. An electric machine having the following features:
(a) a stator (4) provided with windings (10), a rotor (6) and an air gap (16) between the stator (4) and the rotor (6);
(b) the stator is composed with a stator base (12) of metal and with stator teeth (8) projecting from the stator base (12) in the direction towards the air gap (12) and being all or in part provided with a winding (10);
(c) a coolant guiding means (22) for liquid coolant is provided in the stator base (12) over the periphery thereof and is in heat transferring communication with the sites of heat generation, with said coolant being adapted to be supplied to the coolant guiding means (22) and discharged from the stator base (12) on the same axial side of the machine (2);
characterized in
(d) that the coolant guiding means comprises a plurality of coolant channels (22) distributed over the stator base periphery and extending in U-shaped manner and the two legs thereof being each spaced radially with respect to the stator base axis and being disposed in heat transferring communication with the sites of heat generation such that coolant inlet and coolant outlet are located on the same axial side of the machine (2);
(e) and in that the coolant channels (22) extending in U-shaped manner are formed by coolant pipes cast into the metal of the stator base (12).

2. A machine according to claim 1,
characterized in that the stator teeth (8) are slid axially onto the stator base (12) and are mounted there.

3. A machine according to claim 1 or 2,
characterized in that the stator base (12) constitutes a continuous partition.

4. A machine according to any one of claims 1 to 3,
characterized in that cooling channels (32) are provided in addition in individual ones or all of the stator teeth (8) of iron which are provided with windings (10).

5. A machine according to claim 4,
characterized in that the cooling channels (32) communicate with the coolant pipes.

6. A machine according to any one of claims 1 to 5,
characterized in that the windings (10) are cast with thermally conductive casting compound.

7. A machine according to any one of claims 1 to 6,
characterized by permanent-magnet excitation for the rotor (6).

8. A machine according to any one of claims 1 to 7,
characterized by electronic commutation.

9. A machine according to any one of claims 1 to 8,
characterized in that the rotor (6) is designed in the form of a hollow cylindrical external rotor.

## Revendications

1. Machine électrique présentant les caractéristiques suivantes :
(a) un stator (4) pourvu d'enroulements (10), un rotor (6) et un entrefer (16) entre le stator (4) et le rotor (6);
(b) le stator comprend un pied de stator (12) en métal et des dents de stator (8) qui font saillie du pied de stator (12) en direction de l'entrefer (16) et qui sont toutes ou en partie pourvues d'un enroulement (10);
(c) un conduit de moyen de refroidissement (22) pour un moyen de refroidissement liquide est prévu dans le pied de stator (12) sur la périphérie de celui-ci, en liaison d'échange de chaleur avec les endroits où la chaleur est engendrée, le moyen de refroidissement pouvant être amené au conduit de moyen de refroidissement (22) et évacué du pied de stator (12) du même côté axial de la machine (2),
caractérisée en ce que
(d) le conduit de moyen de refroidissement présente plusieurs canaux de moyen de refroidissement (22) répartis sur la périphérie du pied de stator, s'étendant en formant un U dont les deux branches sont disposées respectivement espacées radialement par rapport à l'axe du pied de stator, en liaison d'échange de chaleur avec les endroits où la chaleur est engendrée, de telle façon que l'entrée de moyen de refroidissement et la sortie de moyen de refroidissement soient situées du même côté axial de la machine (2);
(e) et en ce que les canaux de moyen de refroidissement (22) s'étendant en formant un U sont formés de tubes de moyen de refroidissement noyés dans le métal du pied de stator (12).

2. Machine selon la revendication 1,
caractérisée en ce que les dents de stator (8) sont enfilées axialement sur le pied de stator (12) et y sont fixées.

3. Machine selon la revendication 1 ou 2,
caractérisée en ce que le pied de stator (12) forme une paroi de séparation continue.

4. Machine selon l'une quelconque des revendications 1 à 3,
caractérisée en ce que de plus des canaux de refroidissement (32) sont prévus dans une partie des ou dans toutes les dents de stator (8) en fer pourvues d'enroulements (10).

5. Machine selon la revendication 4,
caractérisée en ce que les canaux de refroidissement (32) communiquent avec les tubes de moyen de refroidissement.

6. Machine selon l'une quelconque des revendications 1 à 5,
caractérisée en ce que les enroulements (10) sont scellés avec une masse de scellement conductrice de la chaleur.

7. Machine selon l'une quelconque des revendications 1 à 6,
caractérisée par une excitation par aimants permanents pour le rotor (6).

8. Machine selon l'une quelconque des revendications 1 à 7,
caractérisée par une commutation électronique.

9. Machine selon l'une quelconque des revendications 1 à 8,
caractérisée en ce que le rotor (6) est un rotor extérieur cylindrique creux.
